# EUROPEAN PATENT SPECIFICATION

(11) **EP 1 941 598 B1**
(45) Date of publication and mention of the grant of the patent: **10.09.2014**
(21) Application number: 05804199.7
(22) Date of filing: 03.10.2005
(51) Int. Cl.: H02K 1/32, E21B 4/04, H02K 1/30

(54) **TOP DRIVE DRILLING SYSTEM AND OTHER APPLICATIONS USING A LOW SPEED DIRECT DRIVE AC MOTOR**
OBERANTRIEBS-BOHRSYSTEM UND ANDERE ANWENDUNGEN MIT EINEM LANGSAM LAUFENDEN DIREKTANTRIEBS-WECHSELSTROMMOTOR
SYSTEME DE FORAGE A TRANSMISSION SUPERIEURE ET AUTRES APPLICATIONS UTILISANT UN MOTEUR A COURANT ALTERNATIF A TRANSMISSION DIRECTE ET A ROTATION LENTE

(43) Date of publication of application: 09.07.2008
(73) Proprietor: LeTourneau Technologies Drilling Systems, Inc., Houston, TX 77041 (US)
(72) Inventor: WILLIAMS, Kevin R., Cypress, TX 77429 (US); HOWARD, Al, Houston, TX 77015 (US); MCNEASE, Daniel F., Montgomery, TX 77356-8043 (US); HARRIS, Rudy, Longview, TX 75602 (US); BRADLEY, Richard, Cypress, TX 77429 (US)
(74) Representative: Roberts, Peter David
(86) International application number: PCT/US2005/035557
(87) International publication number: WO 2007/040534

(56) References cited:
- EP-A2- 0 063 345
- EP-A2- 0 726 637
- GB-A- 2 348 743
- US-A- 4 116 592
- US-A- 5 751 078
- US-A- 6 024 181
- US-B2- 6 798 104

## Description

### FIELD OF THE INVENTION

This disclosure relates generally to a top drive drilling system using a low speed AC motor.

### BACKGROUND OF THE INVENTION

Industry has used AC motors as prime movers for many years. The typical AC motor is designed to operate at speeds of 3,000 TO 3,600 rpm or more. Many industrial applications and processes utilizing AC motors must reduce the motor speed, typically through mechanical gearing, before the power supplied by the motor can be used. In the oil field, for example, conventional top drive drilling systems may utilize a variable frequency AC motor as the prime mover. The AC motor is responsible for, among other things, supplying the torque needed to rotate the drill string and drill bit during drilling operations. The rotational speed of the bit and, therefore, the top drive is relatively low, typically between 100 and 300 rpm and more typically around 150 rpm. Conventional variable frequency AC motors used in top drive applications have motor speeds usually ten times the bit speed or 1000 to 3000 rpm. Thus, it is conventional for a top drive system to include speed reduction equipment, such as a gearbox, to reduce the rotational speed of the AC motor to a more usable rotational speed. Speed reduction equipment, such as the gearbox mentioned above, adds to the cost of the system, increases the service requirements, increases the number of parts that can fail, and increases the weight of the system.

This application for patent discloses a novel top drive drilling system using a low speed, variable frequency AC motor that does not require additional speed reduction equipment to achieve a rotational speed in the range of 100 to 300 rpm and is, therefore, particularly suited for direct drive applications.

Document EP0063345 discloses an electric drive device for a drill head or a similar part, describing a rotating working movement, of a heading machine for tunnels, galleries or the like, namely a tunnel drilling machine, the rotational speed of the electrical drill head drive (a motor or, in particular, a plurality of electric motors mechanically coupled to the parallel operation) being continuously adjustable. The device includes the following features: the drill head drive comprises at least one three-phase asynchronous motor, in order to supply the motor a converter is provided which is associated with the heading machine and has a regulating device and by means of which the drill head drive is to be supplied with current of a variable frequency, the converter is constructed with a highly protective system in accordance with the conditions of use, an intermediate circuit choke provided for the converting operation is spatially separated per se from a switch cabinet containing the converter, a heat exchanger constructed as a water/air cooler is provided for drawing heat away from at least part of the device, a change-over device is provided, by means of which the drill head drive can be changed over from converter operation to direct mains supply and vice versa.

### SUMMARY OF THE DISCLOSURE

A top drive drilling system using a low speed AC motor is provided, which systems comprises a motor frame, a stator assembly affixed to the motor frame and comprising a plurality of stator laminations compressed into a stator core; a rotor assembly comprising a hollow-tubed spider having a plurality of ribs located on the outer surface and oriented such that the length of the ribs are coincident the length of the tube and a rotor core comprising a plurality of compressed rotor laminations affixed to the outer radial surface of the spider ribs; a hollow motor shaft to which the rotor assembly is coupled; and first and second bearing assemblies mounted between the motor frame and the motor shaft such that the rotor core may rotate relative to the stator assembly; and a motor drive for generating a pulse-width-modulated signal that spins the motor shaft at speeds less than about 500 rpm thereby avoiding speed reduction equipment to achieve a motor shaft speed in the range of about 100 to about 300 rpm

### BRIEF DESCRIPTION OF THE DRAWINGS

The foregoing summary, detailed description of preferred embodiments, and other aspects of this disclosure will be best understood when read in conjunction with the accompanying drawings, in which:
Figure 1 illustrates a direct drive top drive drilling system according to the present invention.
Figure 2 illustrates an embodiment of an AC motor that may be used in top drive system illustrated in Figure 1.
Figure 3 illustrates a stator lamination for an AC motor according to an embodiment related to the present invention.
Figure 4 illustrates a stator assembly for an AC Motor according to an embodiment related to the present invention.
Figure 5 illustrates an end view of a stator assembly for AC motor according to an embodiment related to the present invention.
Figure 6 illustrates an end view of a rotor assembly inside of a stator assembly in an AC motor according to an embodiment related to the present invention.
Figure 7 illustrates a cross-sectional view of an AC motor according to an embodiment related to the present invention.

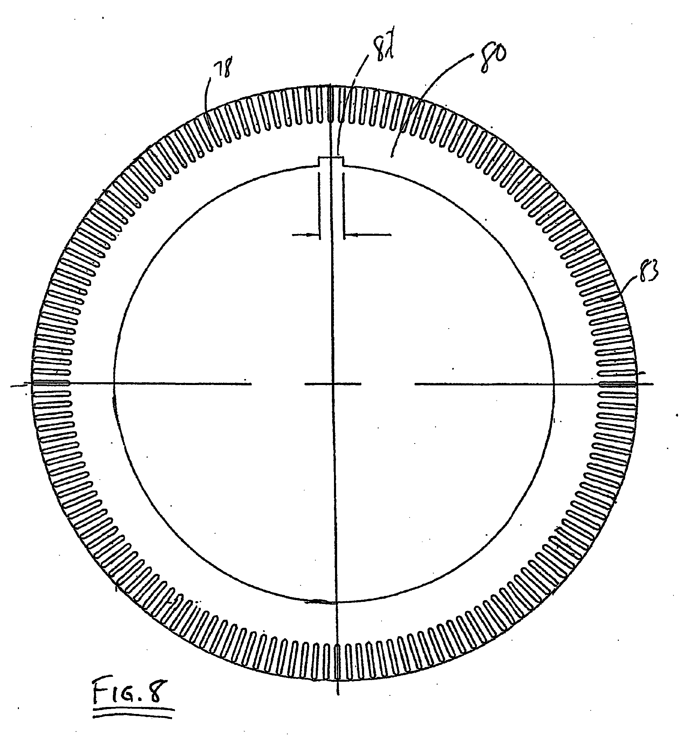

Figure 8 illustrates a rotor lamination that may be used in an AC motor according to an embodiment related to the present invention.

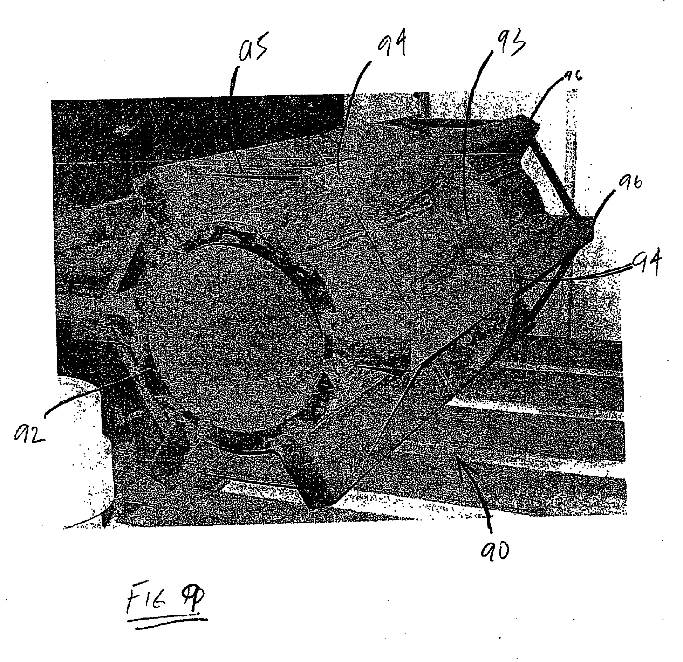

Figure 9 illustrates a rotor spider that may be used in an AC motor according to an embodiment related to the present invention.
Figure 10 illustrates a cross section of a rotor assembly pack for an AC motor according to an embodiment related to the present invention.
Figure 11 illustrates an end view of the AC motor illustrated in Figure 2.

While the invention disclosed herein are susceptible to various modifications and alternative forms, only a few specific embodiments have been shown by way of example in the drawings and are described in detail below. The figures and detailed descriptions of these specific embodiments are not intended to limit the breadth or scope of the inventive concepts or the appended claims in any manner. Rather, the figures and detailed written descriptions are provided to illustrate the inventive concepts to a person of ordinary skill in the art.

### DETAILED DESCRIPTION

In general terms, Applicants have created a new top drive drilling system that uses a low speed, variable frequency AC motor that does not require mechanical speed reduction equipment The AC motor disclosed herein is capable of operating at speeds from 0 rpm to about 300 rpm and may be controlled by a conventional pulse width modulated (PWM) variable speed drive, such as Oilfield-Electric-Marine's commercially available V 3000 Active Energy Management Drive.

A motor according to an embodiment related to the present invention can be constructed having approximately 1500 horsepower and operating at speeds between 0 and about 300 rpm at 600 volts. The motor may be designed with 8 poles, wired in Delta fashion, with an inverter supply frequency of 10Hz to achieve a base rpm of 150. This design results in a good balance of electromagnetic design and allows for a practical number of slots in the space available. Additionally, the motor shaft may be hollow to allow drilling mud to pass there through without the need for a separate piping system to bypass the motor. The motor bearings may be designed, and in the preferred embodiment are designed, to support only the rotor and brake assemblies and not the weight of the drill string. Motor cooling is supplied by air circulation. Further, the motor can be mechanically braked, dynamically braked by dissipating energy into the PWM drive, braked by an energy recovering system, such as a flywheel, or a combination.

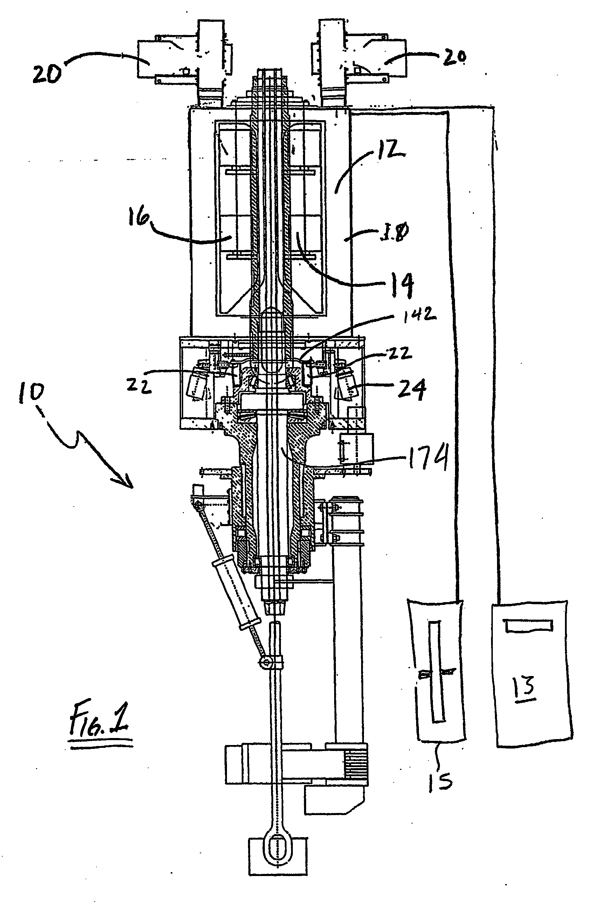

Figure 1 represents a top drive drilling system 10 according to the present invention incorporating a low speed, direct drive AC motor 12. Also illustrated in Figure 1 is a conventional variable frequency drive 13 capable of supplying a PWM driving signal to Motor 12 and dynamically breaking motor 12. Alternately, an energy recovering braking system 15 is also shown.

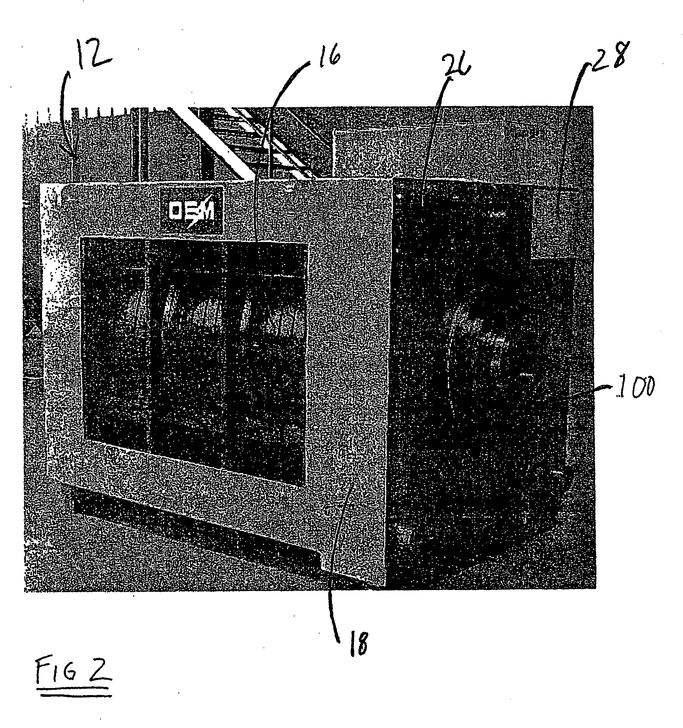

The motor 12 comprises a rotor assembly 14, a stator assembly 16, outer motor casing 18, cooling system 20, rpm encoders 22 and mechanical braking system 24. Figure 2 illustrates a perspective view of a preferred embodiment of an AC motor suitable for use with the present invention. The stator assembly 16 is seen positioned within the motor casing 18. The hollow motor shaft 26 is seen at the top end of the motor 12 along with the cooling ports 28 and 30. Not shown in Figure 2 are the cooling air exhaust manifolds 156, which are located opposite each other over the exposed stator assembly 16.

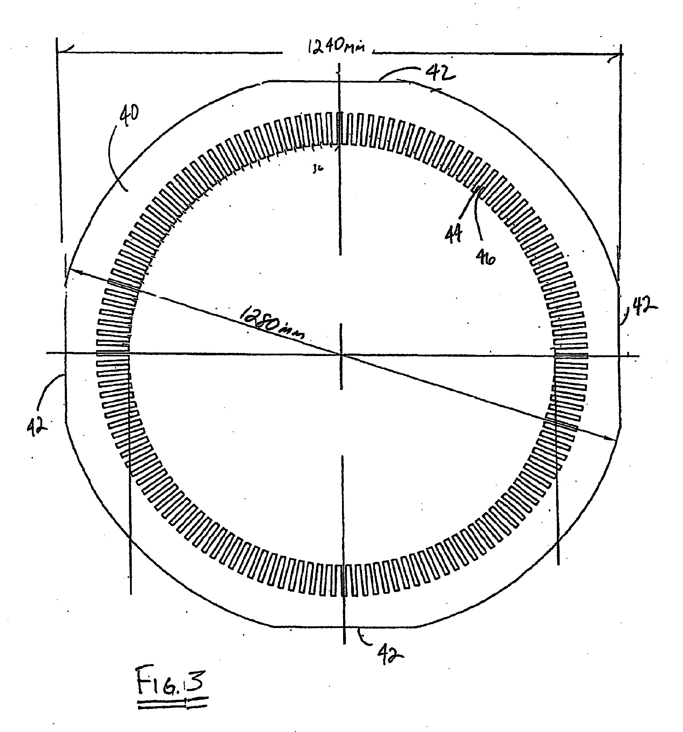

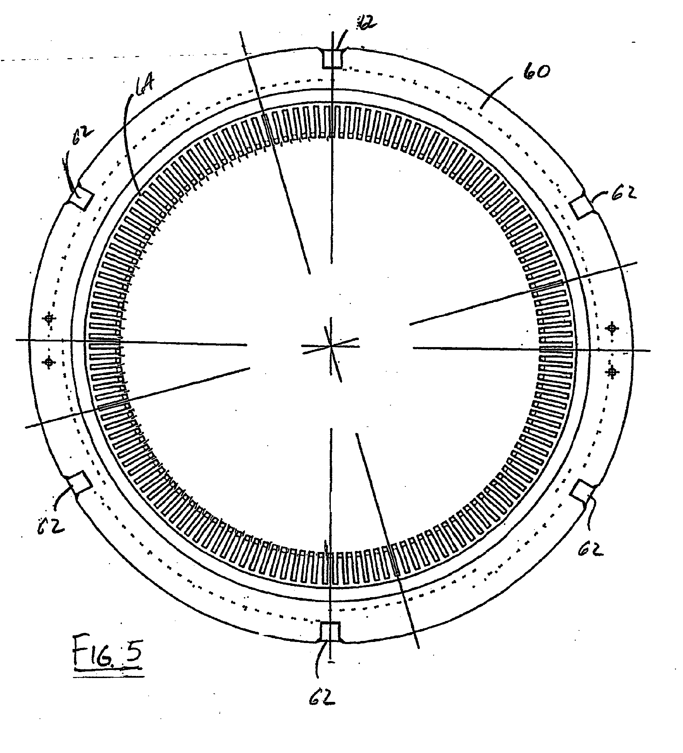

Turning now to a more detail description of the stator assembly 16, the assembly may comprise laminates 40 (see Figure 3) preferably made from 0.5 mm thick pre-coated electrical sheet steel rated at 400 watts/sq m at 50Hz., such as a low silicon (Losil) carbon steel (470-50-A5, with LS coating). Reference may be made to British Specification BS 6404:Section 8.4. To minimize cost, the stator may be designed using single or continuous ring laminations. The alternative, which may be implemented in the present invention, is to create the stator laminates from a number of segments (not shown). This alternative, while viable, is not the preferred embodiment because it increases the part count and builds complexity and, therefore, results in a higher motor cost stator pack 48 and another compression plate 60. The transfer plate 64 helps transfer compression to the entire assembly 16, for example, to each laminate tooth 44, to maintain the desired core pressure. In the preferred embodiment illustrated in Figure 5, the compression plates 60 and transfer plates 64 are separate structures. Alternative designs may include a combination compression/transfer plate that substantially matches the profile of laminate 40 to effectively transfer compression to the entire assembly 16.

The one or more bars 62 may be affixed to the laminates 40 and/or the stator packs 48, and in the preferred embodiment, the bars 62 are welded to alternate stator packs 48. In the preferred embodiment, the stator assembly 16 is compressed to about 100 psi (approximately 689.475 kPa), with a hydraulic press for example, and the core bars 62 are affixed to stator packs 48 while the assembly is compressed. The spacers 50 and/or bars 62 may be modified, such as by cutting short, where they intersect or are adjacent one another to ensure that a closed pocket is not created, which would interfere with coolant circulation.

In the preferred embodiment, the stator coils are fully formed, lap wound with copper strip 2.9 mm thick by 8.2 mm wide. The stator coils are insulated, preferably using an insulation system comprising Kapton and mica insulation on the individual strips followed by mica and glass layer or coating on the total stator pack 48. The insulation system used on the copper strip (e.g., coils) is adequate for voltages at least up to 1500 volts. The insulation used on the stator assembly 16 provides additional dielectric protection and mechanical strength. The coils may be inserted into the laminate slots 46 in conventional fashion, such as with a slot liner. The coils may be fixed in place and in the preferred embodiment are held in place with glass wedges. The wound stator assembly may be vacuum pressure impregnated with an electrical resin, such as a class H resin, epoxy or polyester.

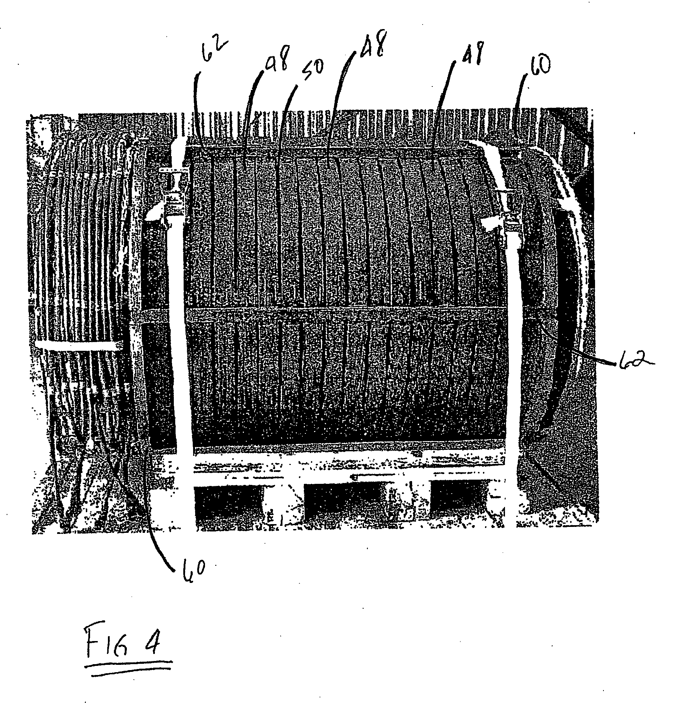

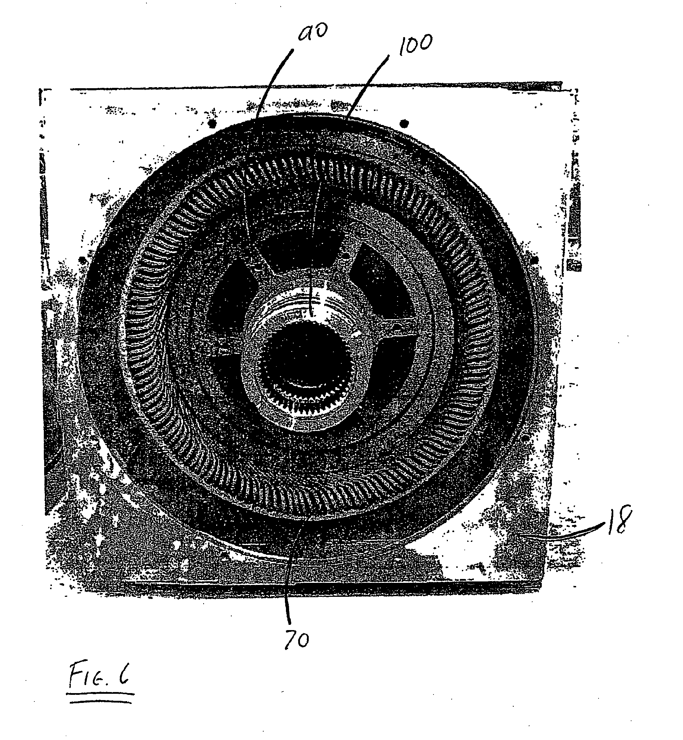

The stator winding overhangs 70, such as shown in Figures 4 and 6, may be and preferably are braced against short circuit. The stator is preferably, but not necessarily, wound in Delta fashion with eight parallel circuits. In the preferred embodiment, the parallel circuits are connected at the ends of the winding overhangs onto twelve copper bus rings, effectively dividing the stator assembly 16 into six sections, with each section having two phases. Cables may be connected directly to the bus ring, such as by lugs, and the cables may be configurable such that the motor about 100 psi (approximately 689.475 kPa) against spider shoulder 96 and the assembly is locked in placed on the spider legs 94. Conductors, preferably copper bars, are positioned in the rotor slots 78 and then secured in place. The conventional Barlock system using sping dowels is suitable to this task.

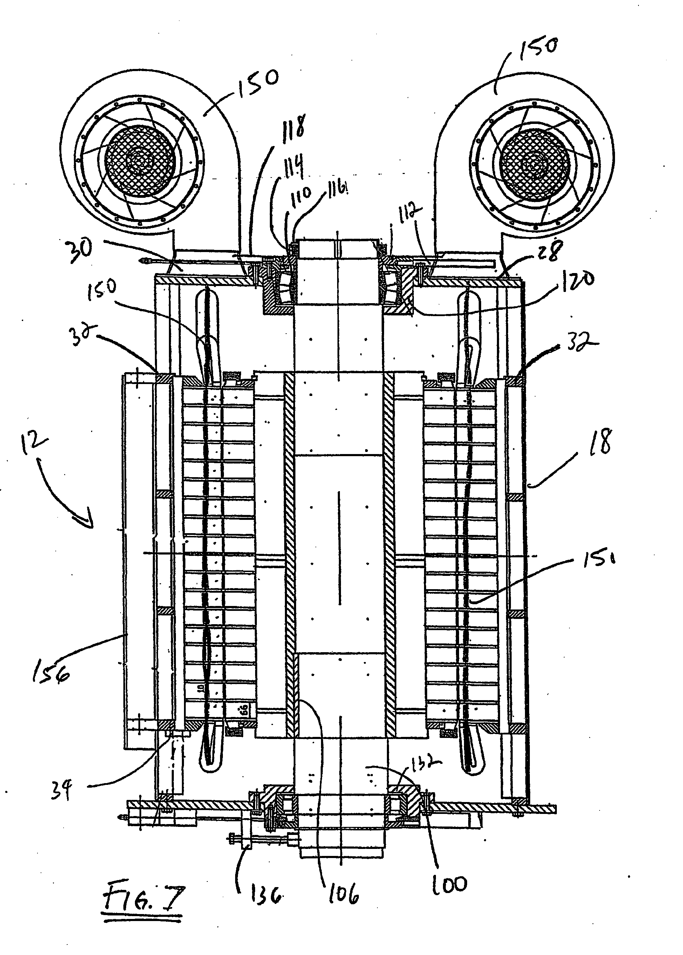

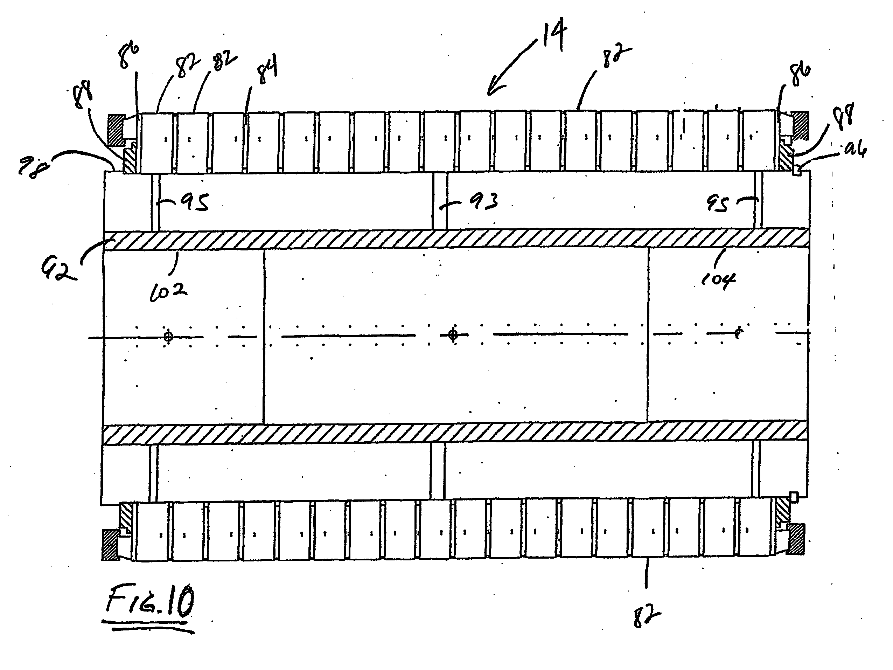

The rotor spider 90 is preferably shrink fitted to the motor shaft 100 (See Figures 6 & 7). Inside diameter sections 102 and 104 at each end of the spider tube 92 provide the interference fit (Figure 10), with the section between being a clearance fit to the motor shaft 100. This interference fit arrangement allows dimensional accuracy to be maintained during machining of the inside diameter surface of the tube 92. Otherwise, the reach of the machine tool would be very long and may lead to difficulties maintaining dimensional tolerances. The interference fit is designed to transmit a minimum of 230% full load torque, which is calculated at minimum fit. An allowance has been made for the temperature of the drilling mud traveling through the hollow motor shaft 100. Any temperature differential between the shaft 100 and the spider 90 will increase the interface pressure between the shaft 100 and the spider 90. It is assumed that a temperature difference of 60*C may be possible, given that the maximum temperature of the mud is about 100*C. The interference fit between the shaft 100 and the spider 90 may be designed, and in the preferred embodiment has been designed, to provide a compromise between torque transmission and stress. Also, in the preferred embodiment, the shrink fit is augmented with an axial key 106 on one section 102 or 104 only (Figure 7).

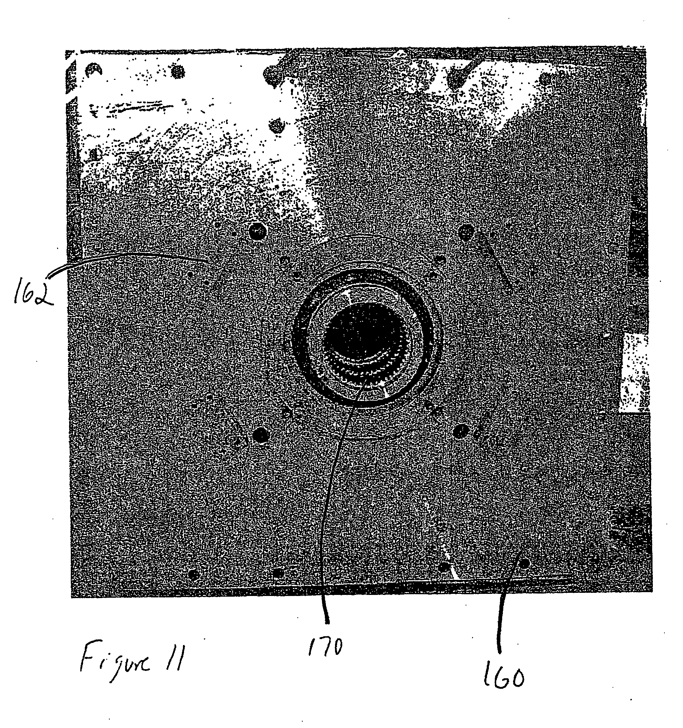

Figure 11 shows an driving end view of a preferred motor 12 for a top drive drilling system 10. The motor endplate 160 is provided with one or more attachment points 162, such as pads, to attach a mechanical braking system (24 in Figure 1). In the preferred embodiment, a disc brake rotor 142 is attached to the motor shaft 100 and one or more, four, and preferably calipers are mounted on the end plate 160. The edge of the disc 142 may function as a register for the speed encoders 22 for the variable frequency drive 13. Also seen in Figure 11, are internal splines 170 in motor shaft 100. In the preferred embodiment, two sets of splines 170 are separated by a groove or other structure adapted to accept a seal (not shown), such as an elastomeric O-ring. The splines 170 allow the driven shaft or pipe 172 to move relative to motor shaft 100 and the seal prevents fluid communication (such as drilling mud) outside of the motor shaft 100 / driven pipe 172 assembly.

Returning to Figure 7, the rotor assembly 14 and motor shaft 100 are shown positioned in the motor casing 18. The top rotor bearing 110 is a spherical roller bearing, such as an SKF model QJ 1068 M. These bearings have a design life in excess of 100,000 hours based on a rotation speed of 150 rpm and thrust from the motor rotor only. Theses bearings are grease lubricated and the grease nipple may be positioned near an edge of the motor 12 to force grease between the two rows of rollers. Excess grease may be expelled into a grease relief chamber 112, which can be emptied as needed. In the preferred embodiment, the bearing 110 is held in place with a shaft nut 114, together with a locking tab washer 116. Beneath the nut 114 is a thrower to prevent rainwater for collecting on top of the bearing seal. No seal between the bearing and the motor is used in the preferred embodiment. The top bearing bracket 120 is fitted with insulation to prevent conduction of potentially damaging currents through the bearing. The fasteners retaining the bracket are fitted with insulating washers and sleeves to prevent bridging of the insulation. The bearing bracket also sits on a raised platform to reduce the possibility of bridging the insulation with standing water.

The bottom rotor bearing 130 may be a cylindrical roller bearing, such as SKF model NU 1072M, which is suitable for vertical motors 12. This bearing has a life in excess of 100,000 hours as well. The grease arrangement for this bearing is similar to the top bearing 110. The bottom bearing 130 has an inboard seal 132 to protect the bearing from any ingress of water caused by build up within the motor. The bottom bearing may be fitted with a simple clamp 136 to lock the bearing in place to prevent vibration damage in transmit. The clamp 136 simply pushes the bearing hard over in its clearance. Clamp 136 must be withdrawn prior to operation of the motor 12.

The effect of the drilling mud temperature on the bearings 110 and 130 should be taken into account The effect of the mud passing through motor shaft 100 will be to increase the temperature of the inner bearing race and thereby possibly reducing the clearance in the bearing. While it is tempting to increase the bearing clearance to account for this effect, it is possible that the bearing clearances will be too large when the bearing is cold (i.e, not heated by the drilling mud) and the bearing could be damaged. In the preferred embodiment, and because of the relatively slow rotational speed of the motor shaft 100, standard bearing clearances are used.

The motor 12 may be cooled in a variety of manners, but in the preferred top drive embodiment disclosed herein the motor 12 is cooled by forced air circulation. Ambient or cooling air is introduced from the top or non-driving end of the motor 12 through cooling ports 28 and 30. In the preferred embodiment, separately powered 15 hp centrifugal fans 150 are mounted on the top of the motor 12 to supply the cooling air. Each fan can operate at about 3,000 cfm. If one fan fails, this arrangement allows the motor to continue to operation, perhaps at lower output. Each cooling port 28 and 30 has a baffle 150 that effectively splits the air stream into two components, one component for the top half of the motor 12 and the other component for the bottom half of the motor 12. Based on heat transfer analysis, additional baffling may be provided in each fan to apportion the amount of air that is split by the baffles 150. The air passes over the stator end windings and into the pie-shaped spider sections 159 from each end. The air is then expelled through radial channels between the rotor packs 82 and into adjacent radial channels in the stator assembly 16.

Allowing the air to enter the top and bottom of the motor 12 from two points improves the distribution of the cooling air in the motor 12. The air is expelled from the motor on both sides through exhaust manifolds 156 (Figure 7) down and away from the motor 12 to reduce the risk of air re-circulation. The exhaust manifolds are designed to prevent ingress of rainwater into the motor 12.

The present invention obviates the need for expensive and maintenance intensive speed reduction equipment.

## Claims

1. A top drive drilling system using a low speed AC motor (12), comprising:
a motor frame,
a low speed AC motor including:
a stator assembly (16) affixed to the motor frame and comprising a plurality of stator laminates compressed into a plurality of stator packs (48) spaced to form radially directed channels for the movement of ambient air;
a spider (90) comprising a hollow tube (92) having a plurality of ribs (94) located on the outer tube surface and oriented such that the length of the ribs are coincident the length of the hollow tube, wherein each of the plurality of ribs has an outer radial surface;
a rotor core comprising a plurality of compressed rotor laminates (80) compressed into a plurality of rotor packs (82) spaced to form radially directed channels (84) for the movement of ambient air, affixed to the outer radial surface of the spider ribs;
a cooling system mounted on the low speed AC motor, comprising one or more centrifugal fans with output directed to supply ambient air through the radially directed channels in the stator assembly and rotor core;
a hollow motor shaft (100) to which the spider is coupled;
first and second bearing assemblies mounted between the motor frame and the hollow motor shaft such that the rotor core may rotate relative to the stator assembly; and
a motor drive (13) for generating a variable frequency pulse-width modulation signal to drive the AC motor at speeds of about 0 to 300 rpm thereby avoiding speed reduction equipment.

2. The top drive system of claim 1, wherein the AC motor further comprises three phrase delta windings creating 8 poles and the motor drive supplies a base frequency of 10 Hz.

3. The top drive system of claim 1, further comprising:
a braking assembly; and
the first and second bearings support only the weight of the rotor assembly and braking assembly.

4. The top drive system of claim 1, wherein the stator assembly is doweled to the motor frame to withstand 500% full load torque.

5. The top drive system of claim 1, wherein the rotor spider is dadoed to accept the ribs and the ribs are filet welded to the shaft such that any one rib can withstand up to 500% full load torque.

6. The top drive system of claim 1, wherein the first bearing is a spherical bearing and is electrically insulated from the rotor and motor frame, and wherein the second bearing is a cylindrical bearing and is electrically insulated from the rotor and motor frame.

## Patentansprüche

1. Ein Kraftdrehkopf-Bohrsystem, das einen Langsamlauf-Wechselstrommotor (12) verwendet, umfassend:
einen Motorrahmen;
einen Langsamlauf-Wechselstrommotor, der einschließt:
eine Statorbaugruppe (16), die am Motorrahmen befestigt ist und eine Vielzahl von Statorblechen umfasst, die zu einer Vielzahl von Statorpaketen (48) zusammengepresst sind, die beabstandet sind, um radial gerichtete Kanäle für die Bewegung von Umgebungsluft zu bilden;
einen Rotorstern (90), der ein hohles Rohr (92) mit einer Vielzahl von Rippen (94) umfasst, die sich an der Außenfläche des Rohrs befinden und so ausgerichtet sind, dass die Längen der Rippen mit der Länge des hohlen Rohrs übereinstimmen, worin jede aus der Vielzahl von Rippen eine radiale Außenfläche hat;
einen Rotorkern, der eine Vielzahl von zusammengepressten Rotorblechen (80) umfasst, die zu einer Vielzahl von Rotorpaketen (82) zusammengepresst sind, die an der radialen Außenfläche der Rotorsternrippen befestigt und beabstandet sind, um radial gerichtete Kanäle (84) für die Bewegung von Umgebungsluft zu bilden;
ein am Langsamlauf-Wechselstrommotor angebrachtes Kühlsystem, das einen oder mehrere Zentrifugallüfter umfasst und dessen Ausgang so gerichtet ist, dass Umgebungsluft durch die radial gerichteten Kanäle in der Statorbaugruppe und dem Rotorkern zugeführt wird:
eine hohle Motorwelle (100), mit welcher der Rotorstern gekoppelt ist;
erste und zweite Lagerbaugruppen, die zwischen dem Motorrahmen und der hohlen Motorwelle angebracht sind, sodass der Rotorkern relativ zur Statorbaugruppe rotieren kann; und
eine Motoransteuerung (13) zum Erzeugen eines Pulsweitenmodulationssignals variabler Frequenz, um den Wechselstrommotor mit Geschwindigkeiten von etwa 0 bis 300 U/min zu betreiben, wodurch eine Geschwindigkeitsverringerungseinrichtung vermieden wird.

2. Kraftdrehkopfsystem nach Anspruch 1, worin der Wechselstrommotor ferner Dreiphasen-Dreieckwicklungen umfasst, die 8 Pole erzeugen, und die Motoransteuerung eine Grundfrequenz von 10 Hz liefert.

3. Kraftdrehkopfsystem nach Anspruch 1, ferner umfassend:
eine Bremsbaugruppe; und
die erste und die zweite Lagerbaugruppe tragen nur das Gewicht der Rotorbaugruppe und der Bremsbaugruppe.

4. Kraftdrehkopfsystem nach Anspruch 1, worin die Statorbaugruppe mit dem Motorrahmen verstiftet ist, um 500% Nenndrehmoment zu standhalten.

5. Kraftdrehkopfsystem nach Anspruch 1, worin der Rotorstern gekehlt ist, um die Rippen aufzunehmen, und die Rippen mit der Welle kehlverschweißt sind, sodass eine jede Rippe bis zu 500% Nenndrehmoment standhalten kann.

6. Kraftdrehkopfsystem nach Anspruch 1, worin das erste Lager ein Kugellager ist und vom Rotor und Motorrahmen elektrisch isoliert ist und worin das zweite Lager ein Zylinderrollenlager ist und vom Rotor und Motorrahmen elektrisch isoliert ist.

## Revendications

1. Système de forage à entrainement par le haut utilisant un moteur CA basse vitesse (12), comprenant :
un châssis de moteur,
un moteur CA basse vitesse comprenant :
un ensemble formant stator (16) fixé au châssis de moteur et comprenant une pluralité de strates de stator comprimées en une pluralité de packs de stator (48) espacés pour former des canaux radialement orientés permettant la circulation de l'air ambiant ;
une roue à rayons (90) comprenant un tube creux (92) présentant une pluralité de nervures (94) situées sur la surface extérieure de tube et orientées de telle sorte que la longueur des nervures coïncide avec la longueur du tube creux, chaque nervure de la pluralité de nervures présentant une surface extérieure radiale ;
un noyau de rotor comprenant une pluralité de strates de rotor (80) comprimées en une pluralité de packs de rotor (82) espacés pour former des canaux orientés radialement (84) permettant la circulation de l'air ambiant, fixé à la surface radiale extérieure des nervures de la roue à rayons ;
un système de refroidissement monté sur le moteur CA basse vitesse, comprenant un ou plusieurs ventilateurs centrifuges dont la sortie est orientée de manière à alimenter en air ambiant les canaux orientés radialement dans l'ensemble formant stator et le noyau de rotor ;
un arbre moteur creux (100) auquel la roue à rayons est couplée ;
des premier et second ensembles formant palier montés entre le châssis de moteur et l'arbre moteur creux de sorte que le noyau de rotor peut tourner par rapport à l'ensemble formant stator ; et
une commande de moteur (13) permettant de générer un signal à modulation de durée d'impulsion et fréquence variable afin de commander le moteur CA à des vitesses d'environ 0 à 300 tpm, ce qui permet d'éviter un équipement de réduction de vitesse.

2. Système à entrainement par le haut selon la revendication 1, dans lequel le moteur CA comprend en outre des bobinages triphasé de type delta créant 8 pôles et la commande de moteur fournit une fréquence de base de 10 Hz.

3. Système à entrainement par le haut selon la revendication 1, comprenant en outre :
un ensemble formant frein ; et
les premier et second paliers supportent seulement le poids de l'ensemble formant rotor et de l'ensemble formant frein.

4. Système à entrainement par le haut selon la revendication 1, dans lequel l'ensemble formant stator est chevillé au châssis de moteur pour résister à 500 % de couple à pleine charge.

5. Système à entrainement par le haut selon la revendication 1, dans lequel la roue à rayons de rotor est rainurée pour accepter les nervures et les nervures sont soudées à clin à l'arbre de sorte qu'une quelconque nervure peut supporter jusqu'à 500 % du couple à pleine charge.

6. Système à entrainement par le haut selon la revendication 1, dans lequel le premier palier est un palier sphérique et est électriquement isolé du rotor et du châssis de moteur, et dans lequel le second palier est un palier cylindrique et est électriquement isolé du rotor et du châssis de moteur.
